# EUROPEAN PATENT APPLICATION

(11) **EP 4 741 817 A1**
(43) Date of publication of application: **13.05.2026**
(21) Application number: 24211721.6
(22) Date of filing: 08.11.2024
(51) Int. Cl.: G01N 29/14, G01N 29/24

(54) **REMOTE SUFACE ACOUSTIC WAVE SENSING OF CURABLE SEALANTS AND FOAMS FOR EFFECTIVELY SEALING CONSTRUCTION CAVITIES AND JOINTS**

(71) Applicant: Hilti Aktiengesellschaft, 9494 Schaan (LI)
(72) Inventor: Pfeil, Armin, 86899 Landsberg am Lech (DE)
(74) Representative: Hilti Aktiengesellschaft Corporate Intellectual Property

(57) **Abstract**

The present invention relates to a surface acoustic wave sensing system comprising a surface acoustic wave sensor configured to be provided relative to a curable chemical sealant or foam and to output, to a measurement device or system, data corresponding to characteristics of the curable sealant or foam identifying whether the curable sealant or foam is curing correctly, data for in service control after curing and/or data corresponding to characteristics of the sealant or foam associated with use of the sealant or foam or foam when installed.

## Description

### Field of the invention

The present invention relates to remote surface acoustic wave sensing of characteristics of curable chemical systems, in particular curable chemical sealants and foams in the field of effectively sealing construction cavities and joints against fire, smoke, noise and environmental conditions.

### Background of the invention

Many sealants and foams exist which provide a good sealing of construction cavities and joints against fire, smoke, noise and environmental conditions. For example, sealants and foams which comprise curable polymers, water- or silicone-based, which are fire-retardant, noise-retardant, water-resistant, intumescent and/or ablative, exist for effectively sealing construction cavities and joints against fire, smoke, noise and environmental conditions. Such sealants and foams are often directly employed on the job site, thereby being sprayed or brushed or otherwise brought onto or into the construction cavities and joints, during or after installation of these construction cavities or joints, and then left to cure.

There are ready to use two component sealants or foams, one component sealant or foams and pseudo one component systems that are directly mixed on the jobsite and brought onto or into the construction cavities or joints to seal against fire, smoke, noise and environmental conditions.

In particular, there is an interest in the construction and building industries to protect a wide range of different cavities and joints in buildings or other construction sides using curable sealants and foams, as they can be easy applied and are a safe and quick measure to seal and protect such cavities and joints.

In order to achieve a safe and fully sealed construction cavity and joint against fire, smoke, noise and environmental conditions, curing of the sealant or foam is required that always involves monitoring the curing time which is strongly dependent on the installation temperature, material installed and on specific weather conditions surrounding the job site. This monitoring is often timeconsuming and inaccurate and may result in not fully cured system which in the end is unsafe to use or in a worst-case scenario cannot ensure a fully sealed cavity or joint against fire, smoke, noise and environmental conditions according to standards.

There are known systems for identifying and tracking different objects which involve use of radio frequency identification devices. However, radio frequency identification devices can only be employed in a distance range very close to the embedded RFID chip which is usually in the range of some millimetres. They can further only be used due to their sensitivity in safe environments and need a large number of tags in order to establish a full picture of the monitored system. In parallel it is only possible to read 1 to 3 tags at the time. The RFID chip technology, however, is not suitable for monitoring certain conditions, which are based on a physical property of an object or material.

When it comes to effectively sealing construction cavities and joints against fire, smoke, noise and environmental conditions, monitoring of the curing process and the fully cured system, also under harsh conditions is needed to ensure provision of a safe system on the jobsite, thereby also safing labour time.

Therefore, there is a need for a monitoring system for curable chemical systems, in particular curable chemical sealants and foam, in the field of sealing construction cavities and joints against fire, smoke, noise and environmental conditions, which is superior over the prior art systems with regard to health and safety, handling, labor time, sustainability and a good balance between workability and curing of the sealant or foam as well as maintain the cured system.

In particular, for sealing cavities and joints that are visible, it is necessary to observe and to note the minimum and maximum time for applying another layer of sealants of more foam, and time for performing further treatment steps for finishing, such as applying a top finish corresponding to the final use of the cavity or joint.

Moreover, it is of interest to provide a system that can be used for monitoring effective sealing of construction cavities and joints against fire, smoke, noise and environmental conditions without adversely affecting the handling, characteristics and the mechanical performance of the sealant or foam as well as to provide a system that is constantly monitored to ensure that a decrease of performance over time is not happening. Finally, there is a need for a system that enables the customer to refrain from referring to curing timetables in order to determine the final installation state of a cured chemical sealant or foam.

It would be beneficial if the chemical sealant or foam can remotely send out information about its curing.

In view of the above, it is an object of the present invention to provide a monitoring system for curable chemical systems, in particular curable chemical sealants and foams, in the field of effectively sealing construction cavities and joints against fire, smoke, noise and environmental conditions, which overcomes the disadvantages of the prior art systems. In particular, it is an object to provide a surface acoustic wave sensing system, which can be handled easily and is eco-friendly, sustainable, can be used under harsh conditions and over a wide distance range and that has a well balanced parallel readability of sensors.

Moreover, it is an object of the present invention to provide method for remote surface acoustic wave sensing of curable chemical sealants and foams as well as employing a handheld device in said method.

These and other objectives as they will become apparent from the ensuring description of the invention are solved by the present invention as described in the independent claims. The dependent claims pertain to preferred embodiments.

### Summary of the invention

One aspect of the present invention relates to a surface acoustic wave sensing system comprising a surface acoustic wave sensor configured to be provided relative to a curable chemical sealant or foam and to output, to a measurement device or system, data corresponding to characteristics of the curable chemical sealant or foam identifying whether the curable chemical sealant or foam is curing correctly, data for in service control after curing and/or data corresponding to characteristics of the chemical sealant or foam associated with use of the chemical sealant or foam when installed.

Another aspect of the present invention relates to a method for remote surface acoustic wave sensing of curable chemical sealants and foams as well as employing a handheld device in said method.

### Description of the invention

As used in the context of present invention, the singular forms of "a" and "an" also include the respective plurals unless the context clearly dictates otherwise. Thus, the term "a" or "an" is intended to mean "one or more" or "at least one", unless indicated otherwise.

Surface acoustic wave sensing technology may be used as the new low-cost technology for continuously monitoring and establishing of real-time awareness of operating conditions in complex systems. Surface acoustic waves have been used for filtering, for example in cellular phones, as well as for sensing, such as in industrial loT sensors. Wired surface acoustic wave chemical sensors are commercially employed in nerve and blister agent detection and are often coupled to GC systems. Recently wireless surface acoustic wave sensors have been improved in the field of communication. Surface acoustic wave sensing technology is able to make measurements such as strain, vibration, humidity, voltage, switch position, corrosion, pressure, strain, torque, temperature, viscosity and mass.

Surface acoustic wave sensors and tags have the follow following advantages: they can operate wirelessly, thereby eliminating wiring, they reduce installation costs, they can operate on rotating parts and spread spectrum communications. Further, they are RFID capable, whereby multiple sensors can be read at once, i.e. up to 100 acoustic responses; they require no batteries, hence no batterie change is needed, thereby reducing maintenance costs, they can be used in hard to access locations.

Surface acoustic wave sensors and tags are sensitive and accurate comparable to wired sensors. Moreover, they are able to perform real- time measurements whereby a rapid response times allows their use for real-time process control and monitoring. Surface acoustic wave sensors have a very long lifetime and hence are suitable for embedded use as well as long term monitoring. Finally, surface acoustic wave sensors and tags survive and operate in extreme conditions, such as at elevated temperatures, in high humidity areas or under very cold conditions.

When it comes to effectively sealing construction cavities and joints against fire, smoke, noise and environmental conditions, it has been surprisingly found out that the employment of surface acoustic waves to a curable chemical sealant or foam enables real-time monitoring and establishing real-time conditions in curable chemical sealants or foams, by measuring pressure, strain, torque, temperature, and mass, thereby providing a system that addresses the disadvantages of the prior art systems.

In particular, for curing monitoring, the change of the dampening of the chemical sealant or foam is measured by its increasing stiffness during curing. It has been found that in the field of effectively sealing construction cavities and joints against fire, smoke, noise and environmental conditions, using a curable chemical sealant or foam, monitoring dampening and hence viscosity is crucial. The higher it is, the less the acoustic waves near the surface of the sensor are attenuated, and if these signals no longer change significantly and exceed a limit known from calibration measurements, curing is complete.

Further, for structural health monitoring of sealed construction cavities and joints against fire, smoke, noise and environmental conditions, compressive strength, deformation and softening can be monitored indicating occurrence of a loss in compressive strength, creep, and/or degradation thereby pointing to a critical behavior of the monitored system.

The surface acoustic wave sensing system according to the present invention comprises a surface acoustic wave sensor configured to be provided relative to a curable chemical sealant or foam and to output, to a measurement device or system, data corresponding to characteristics of the curable chemical sealant or foam identifying whether the curable chemical sealant or foam is curing correctly, data for in service control after curing and/or data corresponding to characteristics of the chemical sealant or foam associated with use of the chemical sealant or foam when installed.

In particular, the surface acoustic wave sensor may be provided on the critical locations on the cavity or joint substrates, at the interface of the sealant or foam to cavity or joint structure, or at different embedment depths.

It is also possible to provide more than one surface acoustic wave sensor in the surface acoustic wave sensing system, which can be read at the same time, giving more comprehensive information about the chemical sealant or foam compared to a single-sensor solution.

The surface acoustic wave sensing system of the present invention is a system, that utilizes a passive remote surface acoustic wave sensor. The sensors can therefore remain during curing and in the final cured chemical sealant or foam and hence can be used to deliver information about condition characteristics of the chemical sealant or foam also during lifetime.

According to the present invention is the surface acoustic wave sensor configured to receive an input signal from a measurement device or system to generate an output signal to a measurement device or system. In particular, the surface acoustic wave sensor is configured to output from the curable chemical sealant or foam to a measurement device or system only the data corresponding to characteristics of the curable chemical sealant or foam to identify whether the curable chemical sealant or foam is curing or installed correctly or is no longer curing or installed correctly. Further, data corresponding to characteristics of the curable chemical sealant or foam associated with use of the cured chemical sealant or foam when installed can be outputted by the surface acoustic wave sensor. Additionally, product-IDs, batch-IDs can be transmitted.

The input signal applied in the present invention is a radio wave signal, preferably with an operating frequency of 2.4 GHz. The output signal is a radio frequency signal corresponding to the condition characteristics of the chemical sealant or foam.

The data generated by the output signal includes data corresponding to one or more of a temperature associated with the curable chemical sealant or foam, stress and strains placed in or on the curable chemical sealant or foam, a compressive force applied to the curable chemical sealant or foam, pressure, movement, resistance and a unique identifier that identifies the curable chemical sealant or foam. Also, data corresponding to parameters such as humidity, creep, softening, deformation, loss of pre-tension and/or torque can be transmitted.

The surface acoustic wave sensing system according to the present invention further comprises a measurement device or system. Preferably the measurement device or system is a handheld device.

The present invention allows monitoring of a curable chemical sealant or foam, either during curing process and/or in a fully cured state. The curable chemical sealant may be a water- or silicon-based sealant, comprising a curable polymer and optionally fire-retardant, water-resistant, noise-retardant, smoke-retardant, intumescent and/or ablative additives, used for effectively sealing construction cavities and joints against fire, smoke, noise and environmental conditions. The curable chemical foam may be foam, comprising a curable polymer and optionally fire-retardant, water-resistant, noise-retardant, smoke-retardant, intumescent and/or ablative additives, used for effectively sealing construction cavities and joints against fire, smoke, noise and environmental conditions.

This method for remote surface acoustic wave sensing of curable chemical sealant or foam comprises generating an input signal with a measurement device or system; applying the input signal to a surface acoustic wave sensor thereby passing a sensing region of the sensor; generating an output signal, and receiving the output signal with a measurement device or system. After receiving the output signal, it can be evaluated.

The measurement device or system, in particular the surface acoustic wave reader, can be communicably connected to a communication interface, and can receive data from the communication interface corresponding to the feedback regarding the characteristics of the chemical sealant or foam. A processor which may be implemented in circuitry, software or a combination of the two, can perform analysis on the data to determine information pertaining to curing and installation of the chemical sealant or foam. For example, the processor can analyze the received data to determine whether the chemical sealant or foam has been installed correctly (or incorrectly) and/or is no longer installed correctly based on a comparison of the received data to predetermined or known data regarding correct (or incorrect) installation. As non-limiting examples, the predetermined or known data regarding correct (or incorrect) installation of the chemical sealant or foam can include stress, strain, pressure, or force thresholds for chemical sealant or foam.

As another example, the measurement device or system can analyze the received data to determine whether characteristics of the chemical sealant or foam pertaining to use or operating conditions of the chemical sealant or foam, when installed, are within acceptable predefined limits or thresholds.

Examples of predefined limits or thresholds for acceptable use of the chemical sealant or foam can include, but are not limited to, limits or thresholds involving a temperature associated with the chemical sealant or foam; presence of water in the chemical sealant or foam; air flow or cracks associated with the chemical sealant or foam; stress, pressure and/or strain placed in or on the chemical sealant or foam or provided by the chemical sealant or foam; dampening and a compressive force applied to or by the chemical sealant or foam.

The predetermined or known data and/or the predefined limits or thresholds can be retrieved from memory of the measurement device or system. Further, the predetermined or known data and/or the predefined limits or thresholds can be input using the user interface. The user interface may include a display configured to output information, based on the analysis, pertaining to installation of the chemical sealant or foam and/or to determine whether characteristics of the chemical sealant or foam pertaining to use or operating conditions of the chemical sealant or foam when installed are within acceptable predefined limits.

Also, in one or more embodiments, the measurement device or system may also be a subcomponent of a multi-function device, such as a portable electronic communication device, including a smart device (e.g., a cell phone, PDA, tablet, etc.). Alternatively, the measurement device or system may be a standalone device. It can also be a mobile smart device and can additionally be coupled with a radio frequency identification (RFID) interrogator, loT or BIM interface. Additionally or alternatively, the measurement device or system may be a socalled "back office" measurement device or system that can monitor one or more chemical sealants or foams.

The present invention shows a use of a remote passive surface acoustic wave sensor in a method for remote sensing of curable chemical sealants or foams for effectively sealing construction cavities and/or joints against fire, smoke, noise and environmental conditions, wherein the curable chemical sealant may be a water- or silicon-based sealant, comprising a curable polymer and optionally fire-retardant, water-resistant, noise-retardant, smoke-retardant, intumescent and/or ablative additives, or wherein the curable chemical foam may be a foam, comprising a curable polymer and optionally fire-retardant, water-resistant, noise-retardant, smoke-retardant, intumescent and/or ablative additives, sealant or foam is a curable an intumescent or ablative chemical sealant or foam.

The remote generating of the input signal and remote receiving the output signal, allows for a remote operation over a distance of several meters. Using a remote passive surface acoustic wave sensor, allows for a system that can be handled easily and is eco-friendly, sustainable, can be used under harsh conditions and over a wide distance range and that has a well balance parallel readability of sensors even under unfavorable conditions.

While aspects of the present invention have been particularly described with reference to the embodiments above, it will be understood by those skilled in the art that various additional embodiments may be contemplated by the modification of the disclosed systems and methods without departing from the spirit and scope of what is disclosed. Such embodiments should be understood to fall within the scope of the present invention as determined based upon the claims and any equivalents thereof.

## Claims

1. A surface acoustic wave sensing system comprising a surface acoustic wave sensor configured to be provided relative to a curable chemical sealant or foam and to output, to a measurement device or system, data corresponding to characteristics of the curable chemical sealant or foam identifying whether the curable chemical sealant or foam is curing correctly, data for in service control after curing and/or data corresponding to characteristics of the chemical sealant or foam associated with use of the chemical sealant or foam when installed.

2. Surface acoustic wave sensing system according to claim 1, wherein the surface acoustic wave sensor is configured to receive an input signal from a measurement device or system to generate the output signal to a measurement device or system.

3. Surface acoustic wave sensing system according to claim 1 or 2, wherein the surface acoustic wave sensor is a passive remote surface acoustic wave sensor.

4. Surface acoustic wave sensing system according to any one of the preceding claims, wherein the surface acoustic wave sensor is configured to output from the curable chemical sealant or foam to a measurement device or system only the data corresponding to characteristics of the curable chemical sealant or foam to identify whether the curable chemical sealant or foam is curing or installed correctly or is no longer curing or installed correctly.

5. Surface acoustic wave sensing system according to any one of the preceding claims, wherein the surface acoustic wave sensor is configured to output from the curable chemical sealant or foam to a measurement device or system only the data corresponding to characteristics of the curable chemical sealant or foam associated with use of the cured chemical sealant or foam when installed.

6. Surface acoustic wave sensing system to any one of the preceding claims, wherein the data corresponding to characteristics of the curable chemical sealant or foam associated with use of the curable chemical sealant or foam when installed include data corresponding to one or more of a temperature associated with the curable chemical sealant or foam, stress and strains placed in or on the curable chemical sealant or foam, a compressive force applied to the curable chemical sealant or foam, pressure, movement, resistance and a unique identifier that identifies the curable chemical sealant or foam.

7. Surface acoustic wave sensing system according to any one of the preceding claims, further comprising a measurement device or system.

8. Surface acoustic wave sensing system according to 7, wherein the measurement device or system is a handheld device.

9. Surface acoustic wave sensing system according to any one of the preceding claims, wherein the curable chemical sealant is a water- or silicon-based sealant, comprising a curable polymer and optionally fire-retardant, water-resistant, noise-retardant, smoke-retardant, intumescent and/or ablative additives, or wherein the curable chemical foam is a foam, comprising a curable polymer and optionally fire-retardant, water-resistant, noise-retardant, smoke-retardant, intumescent and/or ablative additives.

10. Surface acoustic wave sensing system according to any one of the preceding claims, wherein the curable chemical sealant is a silicon-based sealant, comprising a curable polymer, or wherein the curable chemical foam is a foam, comprising a curable polymer and an intumescent additive ofor effectively sealing construction cavities and joints against fire, smoke, noise and environmental conditions.

11. Surface acoustic wave sensing system according to any one of claims 2 to 10, wherein the input signal is a radio wave signal with an operating frequency of 2.4 GHz.

12. Surface acoustic wave sensing system according to any one of claims 2 to 11, wherein the output signal is a radio frequency signal corresponding to the condition characteristics of the chemical sealant or foam.

13. Method for remote surface acoustic wave sensing of curable chemical sealant or foam comprising:
generating an input signal with a measurement device or system;
applying the input signal to a surface acoustic wave sensor thereby passing a sensing region of the sensor;
generating an output signal, and
receiving the output signal with a measurement device or system.

14. The method according to claim 13, further comprising evaluating the output signal.

15. The method according to claim 13 or 14, wherein the measurement device or system is a handheld device.

16. Use of a remote passive surface acoustic wave sensor in a method for remote sensing of curable chemical sealants and/or foams for effectively sealing construction cavities and/or joints against fire, smoke, noise and environmental conditions.
